# EUROPEAN PATENT APPLICATION

(11) **EP 2 226 774 A2**
(43) Date of publication of application: **08.09.2010**
(21) Application number: 10002267.2
(22) Date of filing: 04.03.2010
(51) Int. Cl.: G08B 13/184, G01S 17/02

(54) **System control unit for a volumetric alarm device**

(30) Priority: 04.03.2009 IT CS20090006
(71) Applicant: INNOVA - TECHNOLOGY SOLUTIONS S.R.L., 66100 Chieti (IT)
(72) Inventor: Abate, Salvatore, 84012 Angri (SA) (IT); Barberi, Riccardo, 87036 Rende (CS) (IT); Chiarantoni, Michele, 70126 Bari (IT); Desiderio, Giovanni, 87046 Montalto Uffugo (CS) (IT); Labbozzetta, Emilio, 89020 Sinopoli (IT); Lombardo, Giuseppe, 87036 Rende (CS) (IT); Lugarà, Mariacarla, 89125 Reggio Calabria (IT); Marino, Manuela, 89131 Reggio Calabria (IT); Martino, Sergio, 70126 Bari (IT); Mazzi, Giorgio, 89124 Reggio Calabria (IT)
(74) Representative: Perrotta, Aldo

(57) **Abstract**

System control unit for a volumetric alarm device which consists of a pulsed laser beam generator, a deflection system, a tridimensional moving unit of the deflection system, a device for the reception of the backward laser beam, a module for calculating the time of flight (TOF) between the forward and backward time of the laser beam, where said system control unit acquires a reference matrix, controls the laser driver to generate the electrical pulse to switch on and off the laser beam, manages the driver of the device which received the backward laser beam, controls the moving unit for the laser beam deflection system, manages the time of flight calculation module and acquires data from the latter, by acquiring a current matrix, manages the user interface, correlates the reference matrix with the current matrix, correlates some parameters of the current matrix with the parameters of the reference matrix, determines the alarm parameters, verifies if the alarm parameters have exceeded a threshold of change and whether the threshold of change has been exceeded, activates an alarm indicating that the monitored volume has been violated, where the transmission and the receiving optic of the laser beam is on the same axis and where that the transmitted and the reflected beam are deflected by the same deflection system

## Description

### Technical field of invention

The present invention regards a system control unit for a volumetric alarm, capable to generate an alarm when the monitored volume is violated by an intrusion element. The system is constituted mainly by an opto-electronic system of transmission and reception of laser pulses which permits to detect the intrusion elements which penetrate inside the laser action field.

The principle of functioning of the system which is based on an algorithm of calculation of the difference between the forward and backward time of the laser beam reflected from an object, Time of Flight, is characterized by a laser beam which scans the controlled volume and measures the distance and the dimensions of the present elements. Every relative variation of this measure produces an event elaborated by the system which decides immediately if it is alarming or not. The system by means of an elaboration is capable to localize not only the intrusion object, but also to determine some its characteristics like dimension, trajectory and the velocity of movement.

### State of the art

The actual commercial alarm device are based majorly on the "on-off" principle. In fact, any kind of technology is used, an alarm in only response to the variation of their state is generated. They are not able to determine their position, dimension, trajectory and the velocity of movement of the object which was introduced into the monitorated area. This absence of further informations produces the disadvantage that the alarm event can not be confirmed by further analysis and the alarms can be generated even when the violation of the monitorated area occurs due to not dangerous events, for example, the presence of animals in the protected zone.

The uncertainty about the intrusion produces different and comprehensive inconveniences.

ES-2070752 describes a control unit of an anti-intrusion device in which a camera for the monitoring of the area to control is used.

The control unit memorizes in phase of initialization a reference photogram of the area and every next photogram is compared to the reference one. Every pixel of the reference photogram and of the next photogram is transformed into a level of grey. The variations of grey are summed and if the sum of the variations of the levels of grey exceeds a prefixed threshold an alarm is generated.

The unit presents the improvements compared to the "On - Off' devices. Still, if the reference photogram has been taken under full light, its difference compared to the photograms taken under other light conditions (dawn or twilight), can present a difference in grey levels scale such that the alarm activates without any penetration into the monitorated area.

To avoid these inconveniences the anti-intrusor device described in JP2007122508 uses a laser beam, a deflection system of laser beam, a deflection device of backward laser beam and a reception system. The distance is calculated for every point and if no point of a Lissajous figure exceeds a predetermined value the system does not generate any alarm. The system presents some limits because it does not preview any self-upgrading of initial data.

### Brief description of the invention

The present invention is aimed to overwhelm the disadvantages present in the state of the art realizing a system control unit for a volumetric alarm device which consists of a laser beam generator, a deflection system of laser beam which is moved, a device for the reception of the backward laser beam, a module for calculating the time of flight (TOF) between the forward and backward time of the laser beam, characterized by the fact that said system control unit acquires a reference matrix, controls the laser driver switching on and off the laser beam, manages the driver of the device which received the backward laser beam, controls the moving unit for the laser beam deflection system, manages the time of flight calculation module and acquires data from the latter, by acquiring a current matrix, manages the user interface, correlates the reference matrix with the current matrix, correlates some parameters of the current matrix with the parameters of the reference matrix, determines the alarm parameters, verifies if the alarm parameters have exceeded a threshold of change and e whether the threshold of change has been exceeded, activates an alarm indicating that the monitored volume has been violated.

Other characteristics and advantages of the invention will be clear from the following description of different modes of the invention realization given as a not limiting example on the figures 1, 2 and 3.

### Brief description of figures.

The fig. 1 represents the optical scheme of transmission and reception of the laser beam.

The fig. 2 represents the scheme of functional blocks the device was divided in.

The fig. 3 represents the diagram related to the functioning of the control unit.

### Detailed description of preferred embodiment of the invention

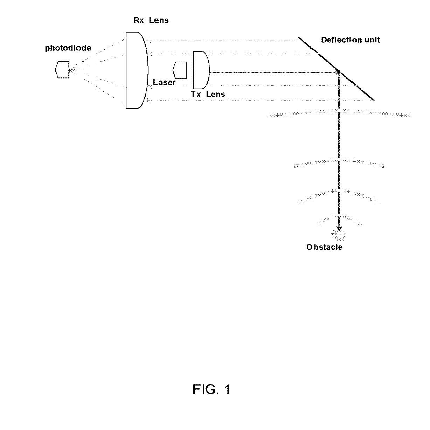

The anti-intrusion system which is managed by the control unit object of present invention is shown in Fig. 1. It is constituted by a laser which emits a laser beam collimated by a Tx lens. The beam is deviated from the deflection unit towards an obstacle. The obstacle reflects the beam which reaches the reception photodiode placed on the same axis of the generated beam after having been deviated again from the deflection unit.

The antiintrusion system which is managed by the control unit object of present invention is divided into the following functional units:
■ LASER BEAM TRANSMISSION UNIT
■ LASER BEAM DEFLECTION UNIT
■ LASER BEAM RECEPTION UNIT
■ TIME OF FLIGHT CALCULATION UNIT
■ CONTROL UNIT

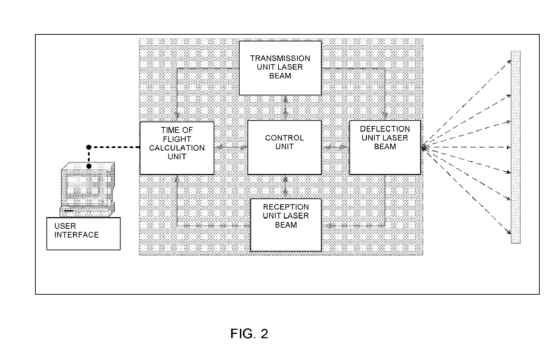

In figure 2 the blocks diagram shows as the alarm device is divided in .

Laser beams are generated by the TRANSMISSION UNIT and after being deflected by the DEFLECTION UNIT scan the volume of interest. In such a way the pulses after being reflected from the objects present inside the scanned volume are captured by the RECEPTION UNIT. The TIME OF FLIGHT CALCULATION UNIT calculates the time interval ***dt*** which runs from the laser beams emission instant and the reception instant of the same pulses. From the measure of the time interval ***dt*** it is possible to arrive by means of the simple relation 2****ds**=**c*dt***, to the distance of the objects to the device ***ds*** and by means of opportune mathematical algorithms implemented with software by the CONTROL UNIT, the added information about the dimension, velocity and trajectory described by the same objects present inside the monitorated area is obtained.

The CONTROL UNIT constitutes the heart or it is the fundamental element of the entire alarm device because it controls every unit and coordinates the communication between them. In particular, inside the CONTROL UNIT five different operations can be individuated:
1. Management of the TRANSMISSION UNIT laser beam;
2. Management of the RECEPTION UNIT laser beam;
3. Management of the DEFLECTION UNIT laser beam which realizes the movement of the beam along the two directions (horizontal and vertical);
4. Management of the TIME OF FLIGHT CALCULATION UNIT;
5. Management of the user interface for the programming of the alarm device.

Besides, the control unit elaborates the data arriving from the time of flight calculation unit in order to verify the existence of the alarm conditions and hence to activate the alarm routine.

The control unit at every acquisition sends a signal to switch on and off the laser in order to emit am infrared laser beam of prefixed duration. Such signal is directly linked to the transmission block driver. Diagnostic signals are sent in order to verify the correct functioning of the two phases of high tension which supply the laser driver and the reception channel. The reception channel and the transmission channel communicate in the only point: when the laser is activated and the radiation is captured by a directly connected to the reception channel sensor from which the start signal of the chronometer leaves. Anyway the start signal can be also sent directly from the TRANSMISSION UNIT.

The management of the deflection unit of the laser beam is realized by means of the exchange of opportune reception and transmission signals with the control unit. In particular the control unit sends the data to deflect the laser beam along the horizontal and vertical direction while the deflection unit communicates to the control unit its current position.

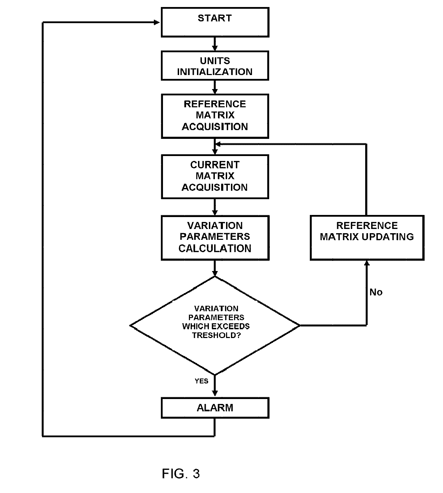

In Fig. 3 the flow diagram relative to the complex functioning of the control unit is shown.

The block *START* sets the communication between the CONTROL UNIT and and different UNITS of the alarm system.

The UNITS INITIALIZATION block realizes the initialization of the units and in particular executes the following functions:
■ sending of the initial settings of the DEFLECTION UNIT
■ initialization of thel TIME OF FLIGHT CALCULATION UNIT

The REFERENCE MATRIX ACQUISITION block is engaged in tracing a signature of the monitored space and in saving the reference data.

The functional block CURRENT MATRIX ACQUISITION is the first step in the environment monitoring cycle because it acquires the space signature at every scan.

The functional block indicated as VARIATION PARAMETERS CALCULATION is engaged in elaboration of the data contained inside the current matrix and inside the reference matrix in order to obtain the variation parameters which evaluation allows to understand if the variations occurred in comparison to the reference state are significant for the alarm activation.

The functional block indicated as *ALARM* activates the alarm procedure. After the calls to the initialization functions of every unit and after the acquisition of the initial reference matrix a continuous cycle of current matrix acquisition is activated. Being correlated with the reference matrix it permits to determine the alarm parameters on which the decision to activate the alarm is based. At the end of every cycle and after having verified that the alarm parameters have not exceeded the variation threshold the current matrix and the actual reference matrix are correlated to obtain a new reference matrix for the next cycle of variation parameters calculation algorithm elaboration.

The variation parameters calculation algorithm elaborates the parameters of the variation of the scene basing itself on the data acquired from the reference matrix and from the current matrix . In particular the calculation algorithm begins to examine the current matrix searching for the zone of monitorated volume which variation is up the threshold value and is the most distant from the alarm system. From this zone the algorithm calculates the parametres *changed volume, hidden volume e diversity diameter.*

The first parameter expresses the volume occupied by a group of contiguous zones all of which have had a variation exceeding a fixed threshold leaving from the varied zone. The *hidden volume* parameter extends the calculation to all those zones which are contiguous one with another even if they have not had variations, but at least one of them is contiguous with a zone which variation has exceeded the threshold and it is more near than this latter to the alarm system. In other words the aim of this parameter is that to evaluate intrusions which occured partially also behind the obstacles present in the monitorated volume. Finally, the parameter *diversity diameter* calculates the maximum distance between the contiguous points that belong to the calculated changed volume. In such a way an index of the intrusion dimension is obtained because even only one zone which exceeds the threshold could generate the alarm without a real intrusion inside the monitorated volume.

The calculation algorithm will repeat the described proceeding until all zones of the monitorated volume will be elaborated or it will be impossible to find a zone according to which calculate the parameter *diversity diameter.*

The invention, certainly, is not limited, to the representation of the figures, but can receive perfections and modifications from men skilled in the art, without going out of the patent frames.

The present invention permits numerous advantages and, particularly, allows to overcome the difficulties that could not be solved by the systems that are actually in commerce.

## Claims

1. System control unit for a volumetric alarm device which consists of:
• a pulsed laser beam generator,
• a deflection system,
• a tridimensional moving unit of the deflection system,
• a device for the reception of the backward laser beam,
• a module for calculating the time of flight (TOF) between the forward and backward time of the laser beam,
where said system control unit
• acquires a reference matrix,
• controls the laser driver to generate the electrical pulse to switch on and off the laser beam,
• manages the driver of the device which received the backward laser beam,
• controls the moving unit for the laser beam deflection system,
• manages the time of flight calculation module and acquires data from the latter, by acquiring a current matrix,
• manages the user interface,
• correlates the reference matrix with the current matrix,
• correlates some parameters of the current matrix with the parameters of the reference matrix,
• determines the alarm parameters,
• verifies if the alarm parameters have exceeded a threshold of change and
• whether the threshold of change has been exceeded, activates an alarm indicating that the monitored volume has been violated;
• at the start said control unit initializes the modules resetting the memory space allocated for the acquisition of the reference matrix, sending the settings for the moving system seeking its initial position and initializing the TOF module
**characterized by** the fact that said control unit calculates the following parameters:
■ The "changed volume", namely the volume occupied by a group of contiguous points that have all undergone a change over the imposed threshold;
■ The "hidden volume", namely the volume occupied by all points which are adjacent each other even if they have not been changed, but that at least one of which is contiguous to a point where the change has exceeded the threshold and it is closest to the alarm device;
■ The "diversity diameter", namely the maximum distance between the contiguous points that belong to the calculated changed volume.

2. System control unit for a volumetric alarm device according to claim 1
**characterized by** the fact that the first parameter which is taken into account is the diameter diversity, and that if this parameter exceeds the threshold value also the parameter of different area will be evaluated, and it will trigger the alarm only if this parameter has exceeded the imposed threshold.

3. System control unit for a volumetric alarm device according to claim 2
**characterized by** the fact that if the parameter of changed volume does not exceed the imposed threshold, the hidden volume parameter will be evaluated and if in this case the threshold value will be exceeded it will trigger the alarm.

4. System control unit for a volumetric alarm device according to claim 3
**characterized by** the fact that the transmission and the receiving optic of the laser beam is on the same axis.

5. System control unit for a volumetric alarm device according to claim 4
**characterized by** the fact that the transmitted and the reflected beam are deflected by the same deflection system.
